# EUROPÄISCHE PATENTANMELDUNG

(11) **EP 0 583 645 A2**
(43) Veröffentlichungstag der Anmeldung: **23.02.1994**
(21) Anmeldenummer: 93111796.4
(22) Anmeldetag: 23.07.1993
(51) Int. Cl.: B60T 8/36

(54) **Aggregat für ein hydraulisches Bremssystem eines Kraftfahrzeuges**

(30) Priorität: 18.08.1992 DE 4227300
(71) Anmelder: ROBERT BOSCH GMBH, 70442 Stuttgart (DE)
(72) Erfinder: Zechmann, Juergen, Dipl.-Ing., D-74081 Heilbronn-Sontheim (DE)

(57) **Zusammenfassung**

Aggregat für ein hydraulisches Bremssystem vorgeschlagen, bei dem die Gehäuse (13, 15, 21, 23, 29, 31, 34 und 35) der Einzelelemente, wie Antriebselektromotor, Druckerzeugerpumpe, Speicher, Dämpfer, Magnetventile und Rückförderpumpe, durch als Trageelemente dienende Rohrleitungen (4, 10, 11, 12, 14, 16, 22, 24, 32, 33, 36 und 37) selbsttragend steif und durch Schweißung oder Lötung hydraulisch dicht miteinander verbunden sind.

Auf diese Weise ist das Aggregat bei kleinster Bauweise den unter der Motorhaube eines Kraftfahrzeuges vorhandenen, beengten Platzverhältnissen optimal anpaßbar. Der Bauart dient auch der Gedanke, die Gehäuse (13, 15, 21, 23, 29, 31, 34 und 36) der Einzelelemente als gewichtsoptimierte Drehteile auszubilden.

## Beschreibung

### Stand der Technik

Die Erfindung geht aus von einem Aggregat für ein hydraulisches Bremssystem eines Kraftfahrzeuges. Ein derartiges Aggregat ist bekannt durch die Druckschrift WO 91/16221.

Bei dieser bekannten Bauart wird ein Gehäuseblock verwendet, der aus einzelnen Platten besteht, die schichtartig angeordnet und dicht aneinander oder aufeinander liegen. In diese Schichtplatten sind die Einzelelemente, wie Antriebselektromotor, Druckerzeugerpumpe, Speicher, Dämpfer, Magnetventile und Rückförderpumpe, integriert. Verbindende Leitungen sind durch Kanäle in den Platten gebildet.

Es liegt auf der Hand, daß eine solche Anordnung wenig variabel ist und unterschiedlichen Einbaubedürfnissen keine Rechnung tragen kann. So ist es nicht ohne weiteres möglich, den zur Verfügung stehenden, oftmals sehr beschränkten Einbauraum voll auszunutzen, oder es können die Konturen und Gewichte der Einzelelemente jeweils nicht optimiert werden.

Der Erfindung liegt die Aufgabe zugrunde, diese Nachteile zu vermeiden und ein Aggregat der eingangs genannten Art zu schaffen, das sehr variabel ist und mit dem auf einfache Weise unterschiedlichen Einbaubedingungen Rechnung getragen werden kann. Der zum Einbau zur Verfügung stehende Raum soll damit so vollkommen wie möglich ausgenutzt werden und es sollen die Konturen und Gewichte der Einzelelemente für jeden speziellen Einbaufall optimierbar sein. Schließlich sollen kostentreibende Gewindeverbindungen vermieden werden.

Diese Aufgabe wird bei dem eingangs genannten Aggregat gemäß der Erfindung durch die kennzeichnenden Merkmale des Hauptanspruchs gelöst.

Eine vorteilhafte Weiterbildung des Erfindungsgegenstandes ergibt sich gemäß den Merkmalen eines Unteranspruches dadurch, daß die hydraulischen Verbindungsleitungen als Tragelemente ausgebildet sind. Das erspart besondere Aufnahme- oder Traghäuse und ermöglicht eine lokal-optimierte Stationierung der Einzelelemente, ohne daß diese Einzelelemente besondere Abstützungen oder Träger benötigen. Die Zusammenfassung von jeweils zwei gleichartigen Gehäusen zu einem Zwillings-Gehäuse ergibt Einsparungen beim Schweißen und/oder Löten.

### Zeichnung

Ausführungsbeispiele der Erfindung sind in der Zeichnung dargestellt und in der nachfolgenden Beschreibung näher erläutert. Es zeigen: Figur 1 die Einzelelemente eines Bremskreises, Figur 2 ein erstes Ausführungsbeispiel einer Verbindungsstelle, Figur 3 ein zweites Ausführungsbeispiel einer Verbindungsstelle, Figur 4 eine räumliche Darstellung der Anordnung der Einzelelemente und Figur 5 ein weiteres Ausführungsbeispiel in räumlicher Darstellung.

### Beschreibung des Ausführungsbeispieles

Ein blockier- und antriebsschlupfgeschütztes hydraulisches Bremssystem hat einen Tandem-Hauptzylinder 1 zum Versorgen zweier Bremskreise I und II. Nur der Bremskreis II ist in der Zeichnung mit seinen Einzelelementen dargestellt.

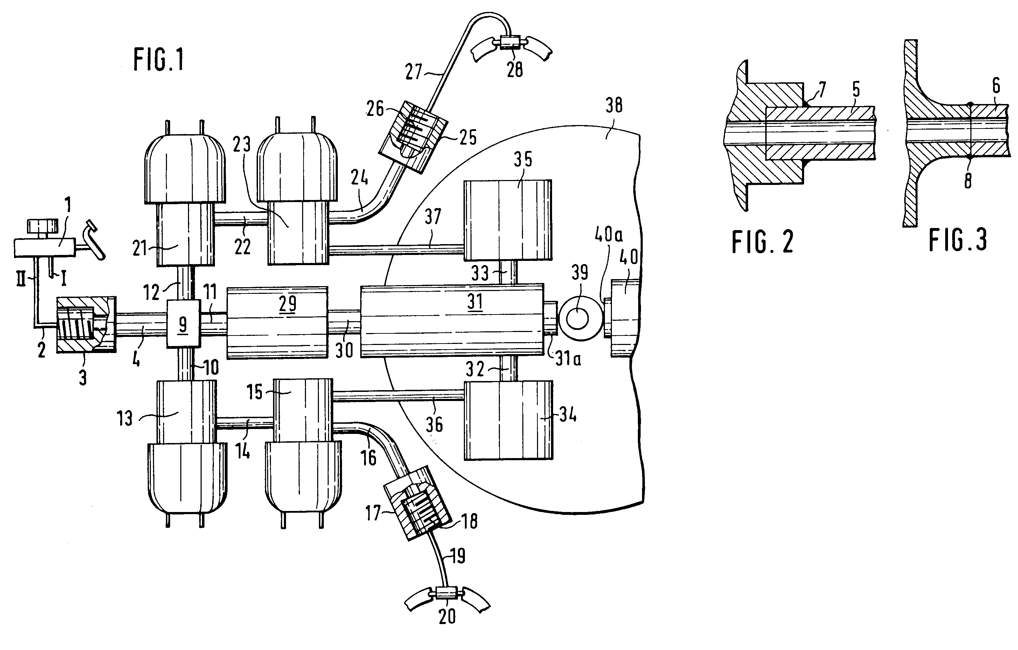

Eine Bremsleitung 2 führt zu einem Anschlußfitting 3, an den eine Rohrleitung 4 angelötet oder angeschweißt ist. Zwei solcher Anschlußarten zeigen die Figuren 2 und 3. Es ist zu erkennen, daß die Verbindung gewindelos ist und lediglich glatte Rohrenden 5 und 6 erfordert, die im Fall der Figur 2 in ein Gehäuse eines Einzelelementes eingelassen und im Ausführungsbeispiel nach der Figur 3 einfach stumpf an das Gehäuse angesetzt sind. Eine jeweils hydraulisch dichte Verbindung zwischen Rohrende 5 bzw. 6 und dem jeweils zugeordneten Gehäuse wird durch eine Ring-Schweißung oder Lötung 7 bzw. eine Stumpfschweißung 8 erreicht.

In der Figur 1 ist ersichtlich, daß die Rohrleitung 4 zu einem Verzweigungsstück 9 führt, das einen Leitungsknoten darstellt, an dem weitere drei Rohrleitungen 10, 11 und 12 angeschlossen sind. Sie sind ebenfalls mittels Schweißung oder Lötung hydraulisch dicht angeschlossen. Die Rohrleitung 10 verläuft zu einem Einlaß-Magnetventil-Gehäuse 13. Mit dem Einlaß-Magnetventil-Gehäuse ist eine Rohrleitung 14 verbunden, die zu einem Auslaß-Magnetventil-Gehäuse 15 führt. An das Gehäuse 15 ist eine Rohrleitung 16 angeschlossen, die in einen angeschweißten oder angelöteten Nippel 17 mündet. Dieser Nippel 17 trägt ein Innengewinde 18 zum Einschrauben einer üblichen, hydraulischen Radbremsleitung 19, d.h., hier endet also das erfindungsgemäße Aggregat. Die Radbremsleitung 19 hat dann Verbindung mit einem herkömmlichen Radbremszylinder 20.

Die Teile 10 und 13 bis 20 bilden einen Regelkanal des Blockierschutzsystems. Ein zweiter Regelkanal beginnt an der Rohrleitung 12.

Diese Rohrleitung 12 ist in gleicher Weise wie die Leitung 10 mit einem Einlaß-Magnetventil-Gehäuse 21 verbunden, und das Gehäuse 21 ist mit einer Rohrleitung 22 versehen, die zu einem Auslaß-Magnetventil-Gehäuse 23 verläuft. An das Gehäuse 23 ist eine Rohrleitung 24 angeschlossen, die wiederum an einem angeschweißten oder angelöteten Nippel 25 endet. Auch dieser Nippel trägt ein Innengewinde 26 zum Einschrauben einer üblichen Radbremsleitung 27. Die Radbremsleitung 27 hat gleichartig wie die Radbremsleitung 19 Verbindung mit einem Radbremszylinder 28.

Die Rohrleitung 11 schließlich führt zu einem Dämpfer-Gehäuse 29, und von dem Dämpfer-Gehäuse 29 geht eine Rohrleitung 30 aus, die Verbindung mit einem Rückförderpumpen-Gehäuse 31 hat. An das Rückförderpumpen-Gehäuse 31 sind zwei Rohrleitungen 32 und 33 angeschlossen, von denen jede zu einem Speicher-Gehäuse 34 bzw. 35 führt, wobei die Speicher-Gehäuse 34 und 35 wiederum rückverbunden sind über je eine Rohrleitung 36 bzw. 37 mit dem Auslaß-Magnetventil-Gehäuse 15 bzw. 23. Lediglich zur Ergänzung ist noch zu bemerken, daß ein Rückförderpumpenkolben 31a durch einen in einem Motor-Gehäuse 38 angeordneten Elektro-Motor angetrieben wird und zwar über einen Exzenter 39, der auch einen in einem Gehäuse 40 angeordneten Rückförderpumpenkolben 40d des Bremskreises I antreibt.

Wie bereits erwähnt, sind jedes Gehäuse 13, 15, 21, 23, 29, 31, 34 und 35 sowie der Anschluß-Fitting 3, das Verzweigungsstück 9 und die Nippel 17 und 25 mit den Rohrleitungen 4, 10, 11, 12, 14, 16, 22, 24, 32, 33, 36 und 37 hydraulisch dicht verschweißt oder verlötet. Dabei sind in erfindungswesentlicher Weise die genannten Rohrleitungen sowie deren Verbindungen mit den einzelnen Gehäusen so fest, daß das ganze in dieser Art erzeugte Aggregat im Bremsbetrieb eigenstabil ist. Im Ausführungsbeispiel gemäß der Figur 1 sind die miteinander verbundenen hydraulischen Elemente in einer gemeinsamen Bezugsebene ausgerichtet.

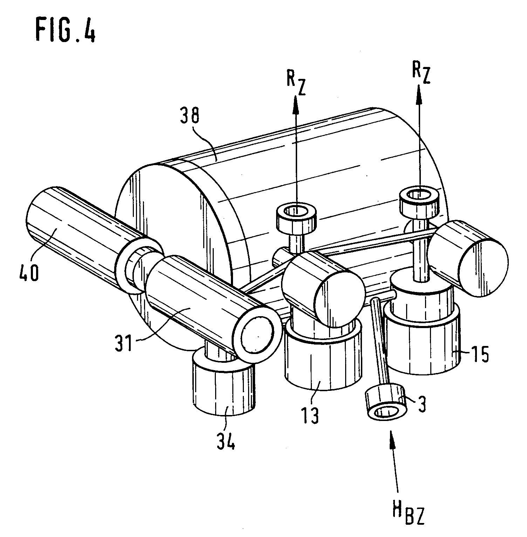

Durch Verwendung gebogener Rohrleitungen oder durch nachträgliches, nur mit großen Kraftaufwand mögliches Verbiegen der ursprünglich geraden Rohrleitungen ist das erfindungsgemäße Aggregat in seiner Gesamtheit so gestaltbar, daß eine optimale Raumausnutzung unter der Motorhaube möglich ist. Ein Beispiel einer Anordnung der Einzelelemente für eine kompakte raumsparende Bauart des erfindungsgemäßen Aggregates ist in der Figur 4 gezeigt und zwar in räumlicher Darstellung. Diese Darstellung macht besonders deutlich, wie man mit verbindenden Rohrleitungen die Einzelelemente auf engstem Raum fest beieinander halten kann.

Schließlich ist noch zu bemerken, daß die Gehäuse 13, 15, 21, 23, 29, 31, 34 und 35 der Einzelelemente als Drehteile herstellbar sind und damit ihre Masse verhältnismäßig klein zu halten ist. Dadurch sind die Einzelelemente in vorteilhafter Weise masseoptimierbar.

Die Wirkungsweise des Aggregats der Blockierschutz-Einrichtung ist an sich bekannt und braucht deshalb hier nicht näher erläutert werden. Es soll aber noch ergänzend angemerkt werden, daß zu einer solchen Blockierschutz-Einrichtung außer den im Gehäuse- und Leitungsaggregat vorgesehenen Einzelelementen noch Drehzahl-Sensoren an den Rädern des Fahrzeuges sowie ein elektronisches Steuergerät zum Verarbeiten der Sensorsignale und zum Ansteuern der Einzelelemente gehört. Diese Sensoren und das Steuergerät sowie die sie verbindenden elektrischen Leitungen sind der besseren Übersicht wegen in der Zeichnung nicht dargestellt.

Ergänzend wird noch darauf hingewiesen, daß unter Hinzufügung weiterer Magnetventil-Gehäuse das Aggregat weiterbildbar ist zur Durchführung von Antriebsschlupfregelbetrieb. Die hydraulischen Verknüpfungen von in den weiteren Magnetventilgehäusen befindlichen Ventilen mit bereits erwähnten können der in der Beschreibungseinleitung genannten Druckschrift WO 91/16221 entnommen werden.

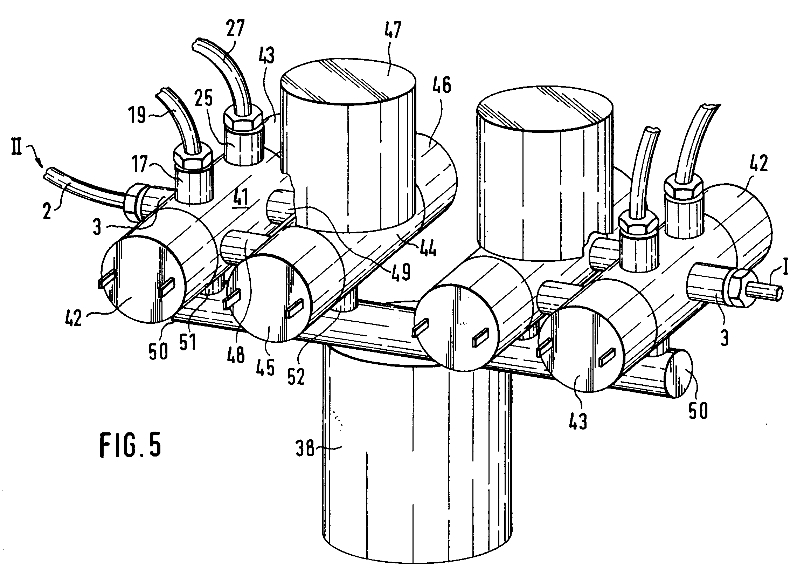

Ein weiteres Ausführungsbeispiel gemäß der Figur 5 unterscheidet sich vom Ausführungsbeispiel der Figur 1, gemäß der hydraulische Elemente in einer gemeinsamen Bezugsebene ausgerichtet sind, durch die räumliche Verteilung der verwendeten hydraulisch wirksamen Elemente und das Einsparen beispielsweise von Rohrleitungen 10 und 12 sowie 4, 16 und 24. Das Einsparen der Rohrleitungen 10 und 12 wird erreicht durch Verwendung eines Zwillings-Einlaß-Magnetventilgehäuses 41, an dessen Enden ein erster und ein zweiter Ventilmagnet 42 bzw. 43 sichtbar sind. Die Rohrleitung 4 der Figur 1 fällt weg durch dichtes Anbringen des Anschlußfittings 3 an dem Zwillings-Einlaß-Magnetventilgehäuse 41. Nippel 17 und 25 für zu Radbremszylindern führende Radbremsleitungen 19, 27 sind unmittelbar mit Zwillings-Einlaß-Magnetventil-Gehäuse 41 druckdicht verbunden durch Schweißung oder Lötung. Sinngemäß sind die beiden Auslaß-Magnetventil-Gehäuse 15, 23 ersetzt durch ein Zwillings-Auslaß-Magnetventil-Gehäuse 44, an dessen Enden Ventilmagnete 45 bzw. 46 angrenzen. Ein Speicher-Gehäuse 47 ist hydraulisch dicht auf dem Zwillings-Auslaß-Magnetventilgehäuse 44 festgeschweißt oder festgelötet. Das Speicher-Gehäuse 47 kann Druckmittel aus zwei in der Figur 1 skizzierten Radbremszylindern 20, 28 aufnehmen im mittels der Ventilmagnete steuerbaren Bremsdruckabsenkvorgang. Die beiden Zwillings-Magnetventil-Gehäuse 41 und 44 sind mechanisch und hydraulisch verbunden mittels zweier Rohrleitungen 48 und 49.

In der Figur 5 befindet sich unterhalb der beiden Zwillings-Magnetventil-Gehäuse 41 und 44 ein Zwillings-Rückförderpumpen-Gehäuse 50, unterhalb dem ein aus der Figur 1 übernommenes Motor-Gehäuse 38 befestigt ist. Innerhalb des Zwillings-Magnetventil-Gehäuses 50 sind in nicht dargestellter Weise aus der Figur 1 übernommene Rückförderpumpen 31a und 40a und ein Exzenter 39 untergebracht. Das Zwillings-Rückförderpumpen-Gehäuse 50 ist direkt oder unter Zwischenordnung von Rohrleitungen 51, 52 mit den Zwillings-Magnetventil-Gehäusen 41 und 44 mechanisch und hydraulisch verbunden. Hierbei kommuniziert das Zwillings-Rückförderpumpen-Gehäuse 50 einlaßseitig durch das Zwillings-Auslaß-Magnetventilgehäuse 44 hindurch mit dem Speicher-Gehäuse 47 und auslaßseitig mit dem Zwillings-Einlaß-Magnetventil-Gehäuse 41 und dessen Anschlußfitting 3.

Eine vom Anschlußfitting 3 ausgehende Bremsleitung 2 gehört beispielsweise zum Bremskreis II der Bremsanlage, die noch einen Bremskreis I besitzt. Wie bereits durch den Begriff "Zwillings-Rückförderpumpen-Gehäuse 50" und die beiden darin untergebrachten Rückförderpumpenkolben 31a und 41a erkennbar, ist das Aggregat der Figur 5 spiegelbildlich aufgebaut. Deshalb kann auf eine weitere Beschreibung verzichtet werden.

Erfindungswesentlich ist, daß die Masse des Aggregates gegenüber den bekannten Bauarten verringert ist und daß ein flexibler Aufbau des Aggregates durch einen gewichtsoptimierten Verbund ermöglicht ist. Die Einzelelemente insgesamt des Aggregates stecken in keinem gemeinsamen Gehäuse sondern sind Teile bzw. Teilepaare des Aggregates, in dem sie durch die Rohrleitungen selbsttragend zusamengefügt und festgehalten sind.

## Patentansprüche

1. Aggregat für ein hydraulisches Bremssystem eines Kraftfahrzeuges mit wenigstens einer Blockierschutz-Einrichtung, die mit mehreren Einzelelementen wie Antriebselektromotor, Druckerzeugerpumpe, Speicher, Dämpfer, Magnetventilen und Rückförderpumpe ausgerüstet ist, die miteinander hydraulisch in Verbindung stehen, dadurch gekennzeichnet, daß die Einzelelemente masseoptimierte Gehäuse (13, 15, 21, 23, 29, 31, 34, 35, 41, 44, 50) haben und daß die Gehäuse der Einzelelemente den jeweiligen örtlichen Gegebenheiten innerhalb des Fahrzeugs platzausnutzend in optimal angepaßter Weise angeordnet und in solcher Anordnung miteinander durch Rohrleitungen (4, 10, 11, 12, 14, 15, 16, 22, 24, 32, 33, 36, 37, 48, 49) verbunden sind.

2. Aggregat nach Anspruch 1, dadurch gekennzeichnet, daß die Rohrleitungen (4, 10, 11, 12, 14, 16, 22, 24, 32, 33, 36, 37, 48, 49) als ein die einzelnen Gehäuse (13, 15, 21, 23, 29, 31, 34, 35, 41, 44, 50) tragendes Gerüst ausgebildet sind.

3. Aggregat nach Anspruch 1 oder 2, dadurch gekennzeichnet, daß die einzelnen Gehäuse (13, 15, 21, 23, 29, 31, 34, 35, 41, 44) zumindest weitgehend als Drehteile hergestellt sind.

4. Aggregat nach einem der Ansprüche 1 bis 3, dadurch gekennzeichnet, daß die Rohrleitungen (4, 10, 11, 12, 14, 16, 22, 24, 32, 33, 36, 37, 48, 49) mit den einzelnen Gehäusen (13, 15, 21, 23, 29, 31, 34 und 35) hydraulisch dicht verschweißt oder verlötet sind.

5. Aggregat nach einem der Ansprüche 1 bis 4, dadurch gekennzeichnet, daß wenigstens zwei der Gehäuse (13, 21; 31, 40) zu einem Zwillings-Gehäuse (41; 50) zusammengefaßt sind.
